# EUROPÄISCHE PATENTSCHRIFT

(11) **EP 2 018 481 B1**
(45) Veröffentlichungstag und Bekanntmachung des Hinweises auf die Patenterteilung: **18.08.2010**
(21) Anmeldenummer: 07729266.2
(22) Anmeldetag: 18.05.2007
(51) Int. Cl.: F04D 29/44, F02B 37/22

(54) **FRISCHGASANLAGE**
FRESH GAS SYSTEM
INSTALLATION DE GAZ FRAIS

(30) Priorität: 19.05.2006 DE 102006023850; 07.12.2006 DE 102006058071
(43) Veröffentlichungstag der Anmeldung: 28.01.2009
(73) Patentinhaber: MAHLE International GmbH, 70376 Stuttgart (DE)
(72) Erfinder: FLEISCHER, Tristan, Northampton NN4 8GA (GB); FRASER, Neil, Northampton NN3 3JQ (GB)
(74) Vertreter: Bernhard, Uwe
(86) Internationale Anmeldenummer: PCT/EP2007/054819
(87) Internationale Veröffentlichungsnummer: WO 2007/135089

(56) Entgegenhaltungen:
- EP-A- 1 433 958
- DE-A1- 2 060 271
- DE-A1-102005 019 896
- FR-A- 2 878 912
- US-A- 3 723 021

## Beschreibung

Die vorliegende Erfindung betrifft eine Frischgasanlage zur Versorgung einer Brennkraftmaschine mit Frischgas, insbesondere in einem Kraftfahrzeug, mit den Merkmalen des Oberbegriffs des Anspruchs 1. Die Erfindung betrifft außerdem einen Drallerzeuger zum Einsatz in einer derartigen Frischgasanlage.

Frischgasanlagen können zur Druckerhöhung im Frischgas mit einer Ladeeinrichtung versehen sein, und zwar insbesondere mit einem Verdichter eines Abgasturboladers. Es hat sich gezeigt, dass es zur Leistungssteigerung der Ladeeinrichtung vorteilhaft ist, die Frischgasströmung stromauf der Ladeeinrichtung mit einem Drall zu beaufschlagen. Dementsprechend können moderne Frischgasanlagen stromauf der Ladeeinrichtung einen Drallerzeuger aufweisen.

Aus der US 6,994,518 B2 ist eine Ladeeinrichtung zur Druckerhöhung im Frischgas bekannt, die eingangsseitig einen Drallerzeuger aufweist, mit dessen Hilfe ein um die Hauptströmungsrichtung des Frischgases drehender Drall im Frischgas erzeugt werden kann. Um den Drall im Frischgas variieren zu können, ist der Drallerzeuger so ausgestaltet, dass Leitschaufeln hinsichtlich ihres Anstellwinkels verstellbar sind. Diese Leitschaufelverstellung wird beim bekannten Drallerzeuger dadurch erreicht, dass die Leitschaufeln radial innen anströmseitig an einem feststehenden Kern befestigt sind, radial innen abströmseitig gegenüber dem Kern frei beweglich sind, radial außen anströmseitig an einem feststehenden Gehäuse befestigt sind und radial außen abströmseitig an einem relativ zum Gehäuse verdrehbaren Ring befestigt sind und dass die Leitschaufeln aus einem relativ dünnen, elastisch verformbaren Blechmaterial hergestellt sind. Durch Verdrehen des Rings ändern die Leitschaufeln ihren Anstellwinkel.

Aus der US 3 723 021 A, DE 20 60 271 A und aus der EP 1 433 958 A sind weitere Frischgasanlagen bekannt, bei denen stromauf einer Ladeeinrichtung ein Drallerzeuger angeordnet ist. Dabei weist der Drallerzeuger einen Strömungsleitkörper auf, an dem die Leitschaufeln integral ausgebildet sind und der zum Verstellen des Anstellwinkels der Leitschaufeln aus einer unverformten Ausgangsstellung heraus um die Hauptströmungsrichtung unter elastischer Verformung verwindbar ist. Bei den bekannten Frischgasanlagen arbeiten die Drallerzeuger passiv, so dass sich der Anstellwinkel der Leitschaufeln mit zunehmender Strömungsgeschwindigkeit des Frischgases durch die Strömungskräfte selbsttätig reduziert.

Die vorliegende Erfindung beschäftigt sich mit dem Problem, für eine Frischgasanlage der eingangs genannten Art bzw. für einen Drallerzeuger eine verbesserte Ausführungsform anzugeben, die sich insbesondere durch eine preiswerte Realisierbarkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Drallerzeuger, der mit einem Strömungsleitkörper ausgestattet ist, an dem die Leitschaufeln integral ausgebildet sind und der um eine Hauptströmungsrichtung elastisch verwindbar ist, um so den gewünschten Anstellwinkel für die Leitschaufeln einzustellen, den Drallerzeuger mit einem Stellantrieb auszustatten. Durch die Verwindung oder Torsion des Strömungsleitkörpers kann für die Verstellung des Anströmwinkels weitgehend auf Relativbewegungen innerhalb des Strömungsleitkörpers verzichtet werden, was die Lagerung der Leitschaufeln erheblich vereinfacht. Ein derartiger, verwindbarer Strömungsleitkörper mit integrierten Leitschaufeln lässt sich folglich sehr preiswert herstellen, wodurch auch der damit ausgestattete Drallerzeuger entsprechend preiswert realisierbar ist. Dabei ist der Strömungsleitkörper grundsätzlich in der einen und in der anderen Drehrichtung verwindbar, so dass grundsätzlich sowohl positive als auch negative Anstellwinkel für die Leitschaufeln einstellbar sind.

Mit Hilfe des Stellantriebs kann eine gewünschte Verwindung des Strömungsleitkörpers gezielt eingestellt werden. Dabei ist es insbesondere möglich, den Anstellwinkel zwischen 0°, die bei einer parallelen Ausrichtung der Leitschaufeln zur Hauptströmungsrichtung des Frischgases vorliegen, und einen maximalen Anstellwinkel in der einen und in der anderen Richtung zu verstellen, um auf diese Weise einen maximalen Drall wahlweise in der einen oder in der anderen Richtung zu erzeugen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzip- darstellung einer Brennkraftmaschine mit einer Frischgasanlage,
- Fig. 2: eine perspektivische Ansicht auf einen Drallerzeu- ger im Längsschnitt,
- Fig. 3: eine halbe Axialansicht des Drallerzeugers aus Fig. 2,
- Fig. 4: einen Längsschnitt des Drallerzeugers entsprechend Schnittlinien IV in Fig. 3.

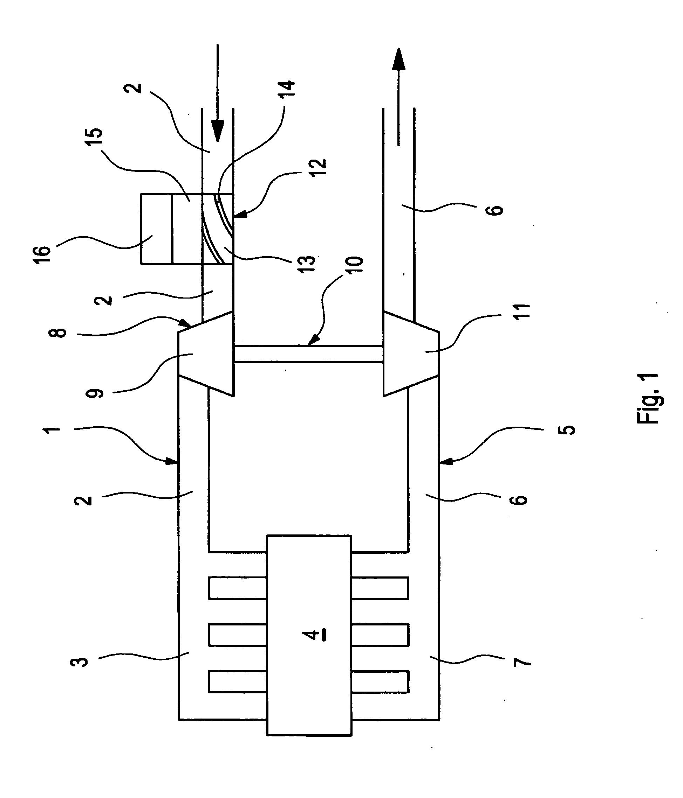

Entsprechend Fig. 1 weist eine Frischgasanlage 1 eine Frischgasleitung 2 auf, die über einen Frischgasverteiler 3 an eine Brennkraftmaschine 4 anschließbar ist. Die Frischgasanlage 1 dient zur Versorgung der Brennkraftmaschine 4 mit Frischgas, das insbesondere Luft ist. Die Brennkraftmaschine 4 ist ebenso wie die Frischgasanlage 1 vorzugsweise in einem Kraftfahrzeug angeordnet. Im gezeigten montierten Zustand weist die Brennkraftmaschine 4 eine Abgasanlage 5 auf, deren Abgasleitung 6 Abgas von der Brennkraftmaschine 4 über einen Abgassammler 7 abführt. Zur Leistungssteigerung der Brennkraftmaschine 4 kann die Frischgasanlage 1 mit einer Ladeeinrichtung 8 ausgestattet sein, die im Frischgas eine Druckerhöhung ermöglicht. Vorzugsweise handelt es sich bei der Ladeeinrichtung 8 um einen Verdichter 9 eines Abgasturboladers 10, dessen Turbine 11 in der Abgasanlage 5 angeordnet ist. Die Frischgasanlage 1 ist außerdem stromauf der Ladeeinrichtung 8 mit einem Drallerzeuger 12 ausgestattet, der so ausgestaltet ist, dass das der Ladeeinrichtung 8 zugeführte Frischgas mit einem um die Hauptströmungsrichtung des Frischgases drehenden Drall beaufschlagbar ist. Der Drallerzeuger 12 besitzt einen Strömungsleitkörper 13 mit Leitschaufeln 14. Bei einer bevorzugten Ausführungsform kann der Drallerzeuger 12 außerdem mit einem Stellantrieb 15 und mit einer Steuerung 16 versehen sein.

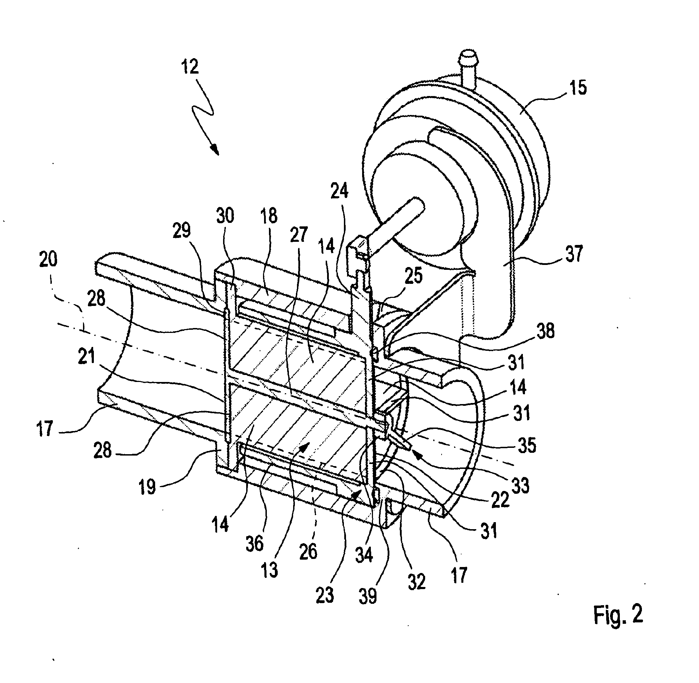

Entsprechend Fig. 2 umfasst der Drallerzeuger 12 einen Frischgaskanal 17, der durch einen Abschnitt der Frischgasleitung 2 gebildet sein kann. Ferner weist der Drallerzeuger 12 ein mantelförmiges Gehäuse 18 auf, das einenends integral in einen Abschnitt des Frischgaskanals 17 übergeht und das anderenends durch einen ringförmigen Flanschabschnitt 19 verschlossen ist, der integral an einem anderen Abschnitt des Frischgaskanals 17 ausgebildet ist und von diesem kragenförmig nach außen absteht. Durch die Integration des Gehäuses 18 in den Frischgaskanal 17 bildet auch das Gehäuse 18 einen Bestandteil des Frischgaskanals 17. Innerhalb des Gehäuses 18 ist der Strömungsleitkörper 13 angeordnet, der im vorliegenden Fall exemplarisch vier Leitschaufeln 14 aufweist. Die Leitschaufeln 14 sind dabei durch Wände gebildet, die sich in axialer Richtung erstrecken und in Umfangsrichtung durchströmbare Kanäle voneinander trennen. Der Stellantrieb 15 ist z.B. mittels eines entsprechend geformten Beschlagelements 37 am Frischgaskanal 17 bzw. am Gehäuse 18 befestigt.

Die Leitschaufeln 14 sind hier bezüglich einer Längsmittelachse 20 des Drallerzeugers 12, die sich parallel zur Hauptströmungsrichtung des Frischgases erstreckt, sternförmig und vorzugsweise symmetrisch verteilt angeordnet. Demnach sind die einzelnen Leitschaufeln 14 hier jeweils um 90° zueinander versetzt angeordnet. Die Leitschaufeln 14 sind am Strömungsleitkörper 13 integral ausgebildet. Beispielsweise ist der Strömungsleitkörper 13 mit den Leitschaufeln 14 als Spritzgussteil aus Kunststoff hergestellt. Hierbei kann eine Ein-Schuss-Technik zur Anwendung kommen. Ebenso ist es möglich, eine Zwei-Schuss-Technik anzuwenden, bei welcher z.B. die Leitschaufeln 14 an andere Bestandteile des Strömungsleitkörpers 13, die zuvor hergestellt worden sind, angespritzt werden. Auf diese Zwei-Schuss-Technik wird weiter unten noch näher eingegangen.

Der Strömungsleitkörper 13 ist ebenso wie die daran ausgebildeten Leitschaufeln 14 aus einem elastischen Material hergestellt, derart, dass es möglich ist, den Strömungsleitkörper 13 zusammen mit den Leitschaufeln 14 um die Hauptströmungsrichtung bzw. um die Längsmittelachse 20 zu verwinden. Dabei führt diese Verwindung, sofern sie innerhalb eines vorbestimmten Winkelbereichs erfolgt, ausschließlich zu elastischen Verformungen des Strömungsleitkörpers 13 bzw. der Leitschaufeln 14. Da plastische Verformungen vermieden werden, ist die durch die Verwindung erzielte Verformung reversibel und quasi beliebig oft wiederholbar. Durch die Verwindung des Strömungsleitkörpers 13 verändert sich der Anstellwinkel der Leitschaufeln 14 gegenüber der Frischgasströmung. In der Folge lässt sich in Abhängigkeit der Verwindung, also in Abhängigkeit des Anstellwinkels die Richtung und die Stärke der Drallbeaufschlagung der Frischgasströmung einstellen.

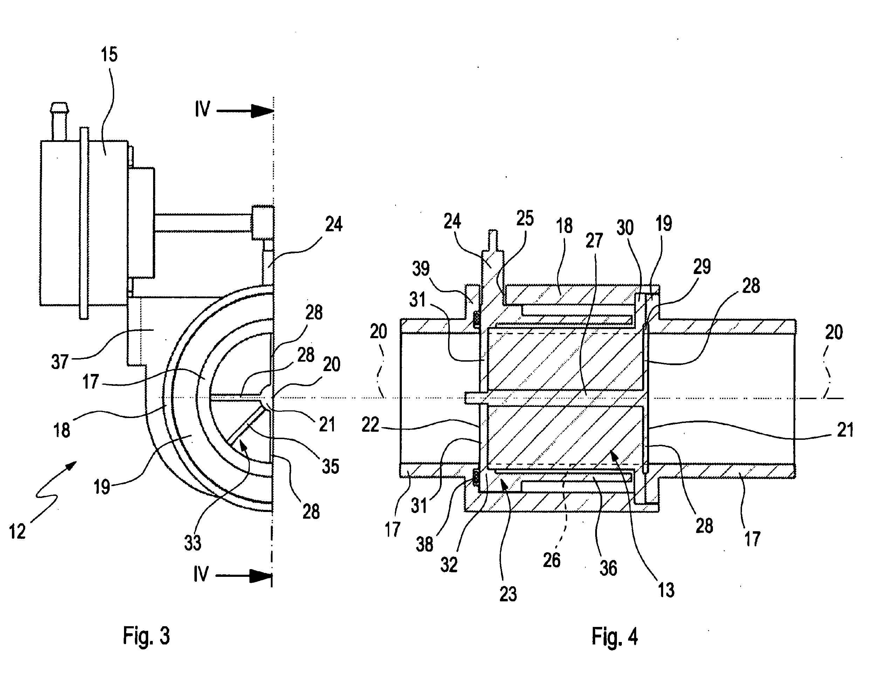

In den Fig. 2 bis 4 ist für eine bevorzugte Ausführungsform jeweils eine unverformte Ausgangsstellung des Strömungsleitkörpers 13 wiedergegeben, bei welcher sich die Leitschaufeln 14 jeweils parallel zur Hauptströmungsrichtung erstrecken. Der Anstellwinkel der Leitschaufeln 14 weist dabei quasi den Wert 0° auf. Der Drallerzeuger 12 ist in dieser Ausgangsstellung deaktiviert, d.h., die den Drallerzeuger 12 durchströmende Frischgasströmung wird nicht mit einem Drall beaufschlagt. Wenn nun der Strömungsleitkörper 13 aus dieser Ausgangsstellung heraus um die Längsmittelachse 20 verwunden wird, bilden die Leitschaufeln 14 zwischen sich schraubenförmige Kanäle, die zu einer Drallbeaufschlagung führen, sofern der Drallerzeuger 12 durchströmt wird. Durch die Verwindung des Strömungsleitkörpers 13 weisen die Leitschaufeln 14 einen mehr oder weniger großen Anstellwinkel auf, der in Abhängigkeit der Drehrichtung der Verwindung positiv oder negativ sein kann.

Abweichend von den hier gezeigten Ausführungsformen ist grundsätzlich eine Ausführungsform möglich, bei welcher der Strömungsleitkörper 13 so hergestellt ist, dass seine Leitschaufeln 14 in der unverformten Ausgangsstellung des Strömungsleitkörpers 13 bereits einen vorbestimmten maximalen Anstellwinkel aufweisen. D.h., in der Ausgangsstellung bilden die Leitschaufeln 14 bereits schraubenförmige Kanäle. Der so vorgeformte Strömungsleitkörper 13 ist dann im Frischgaskanal 17 so angeordnet, dass sein Anströmende axial fest und drehfest mit dem Frischgaskanal 17 verbunden ist, während der Strömungsleitkörper 13 im übrigen relativ zum Frischgaskanal 17 um die Hauptströmungsrichtung drehbar angeordnet ist. Die Auslegung dieses vorgeformten Strömungsleitkörper 13 erfolgt dann zweckmäßig so, dass sich durch die auftretenden Strömungskräfte, z.B. Staudruck, der Strömungsleitkörper 13 zunehmend entwindet und sich so der Anstellwinkel der Leitschaufeln 14 mit zunehmender Strömungsgeschwindigkeit des Frischgases selbsttätig reduziert. Bei dieser Ausführungsform arbeitet der Drallerzeuger 12 ohne zusätzlichen Stellantrieb 15, also passiv.

Bevorzugt wird jedoch die hier in den Fig. 2 bis 4 gezeigte Ausführungsform, bei welcher der Drallerzeuger 12 aktiv arbeitet, also mit dem Stellantrieb 15, um den jeweils gewünschten Anstellwinkel für die Leitschaufeln 14 einzustellen. Mit Hilfe eines aktiven Drallerzeugers 12 ist es insbesondere möglich, sowohl einen positiven Drall als auch einen negativen Drall zu erzeugen.

Entsprechend den Fig. 2 bis 4 weist der Strömungsleitkörper 13 bezüglich der Längsmittelachse 20 zwei axiale Enden 21 und 22 auf, die in Abhängigkeit der Strömungsrichtung des Frischgases ein Anströmende und ein Abströmende bilden. Beispielsweise bildet das erste axiale Ende 21 das Anströmende, während das zweite axiale Ende 22 das Abströmende bildet. Bei umgekehrter Strömungsrichtung im Frischgas ist dann das erste axiale Ende 21 das Abströmende, während dann das zweite axiale Ende 22 das Anströmende bildet. Bei der Ausführungsform der Fig. 2 bis 4 ist der Strömungsleitkörper 13 an seinem ersten axialen Ende 21 axial fest und drehfest mit dem Frischgaskanal 17 verbunden, während er an seinem zweiten axialen Ende 22 axial fest und drehfest mit einem ringförmigen Antriebskörper 23 verbunden ist. Besagter Antriebskörper 23 ist ein Bestandteil des Drallerzeugers 12. Der Antriebskörper 23 ist außerdem im Frischgaskanal 17 um die Hauptströmungsrichtung, also um die Längsmittelachse 20 drehbar angeordnet und kann mit Hilfe des Stellantriebs 15 drehend angetrieben werden. Der Antriebskörper 23 ist mittels einer axial wirkenden, ringförmigen Dichtung 38, z.B. O-Ring, an einer Ringstufe 39 des Gehäuses 18 bzw. des Frischgaskanals 17 drehbar und dicht abgestützt.

Zum Antreiben des Antriebskörpers 23 wirkt der Stellantrieb 15 mit einem Antriebsglied 24 zusammen. Der Stellantrieb 15 ist beispielsweise als pneumatisch betreibbarer Linearantrieb ausgestaltet. Das Antriebsglied 24 durchdringt radial eine im Frischgaskanal 17 bzw. im Gehäuse 18 ausgebildete Aussparung 25 und ist fest mit dem Antriebskörper 23 verbunden. Vorzugsweise ist das Antriebsglied 24 integral am Antriebskörper 23 ausgebildet. Hierdurch kann die Linearverstellung des Stellantriebs 15 in eine Drehverstellung des Antriebskörpers 23 übersetzt werden.

Der Strömungsleitkörper 13 kann eine mantelartige Hülle 26 aufweisen, die sich vom ersten axialen Ende 21 bis zum zweiten axialen Ende 22 erstreckt und die in Umfangsrichtung geschlossen umläuft. Vorzugsweise ist besagte Hülle 26 integral mit den Leitschaufeln 14 ausgebildet. Bei der hier gezeigten Ausführungsform ist der Strömungsleitkörper 13 so hergestellt, dass sich die Leitschaufeln 14 in der gezeigten unverformten Ausgangsstellung des Strömungsleitkörpers 13 parallel zur Hauptströmungsrichtung des Frischgases erstrecken. Aus dieser Ausgangsstellung heraus kann der Strömungsleitkörper 13 somit in der einen und in der anderen Drehrichtung verwunden werden. Zweckmäßig ist der Drallerzeuger 12 dementsprechend so ausgestaltet, dass mit Hilfe des Stellantriebs 15 der Strömungsleitkörper 13 aus der Ausgangsstellung sowohl in die eine als auch in die andere Drehrichtung verwindbar ist.

Die hier gezeigte, bevorzugte Ausführungsform des Drallerzeuger 12 zeichnet sich außerdem durch eine Tragwelle 27 aus, die koaxial zur Hauptströmungsrichtung und zentral, also koaxial zur Längsmittelachse 20 angeordnet ist. Die Tragwelle 27 ist einenends axial und drehfest am Frischgaskanal 17 abgestützt. Anderenends ist an der Tragwelle 27 der Antriebskörper 23 angeordnet. Außerdem sind die Leitschaufeln 14 radial innen mit der Tragwelle 27 verbunden. Im gezeigten Beispiel ist die Tragwelle 27 über mehrere, sternförmig angeordnete Tragstege 28 axial und drehfest am Frischgaskanal 17 abgestützt. Die Anzahl der Tragstege 28 entspricht der Anzahl der Leitschaufeln 14. Im vorliegenden Fall sind somit vier Tragstege 28 vorgesehen, die jeweils um 90° zueinander versetzt angeordnet sind. Vorzugsweise sind die Tragstege 28 integral an der Tragwelle 27 ausgebildet. Die einzelnen Tragstege 28 können radial außen über einen Tragring 29 miteinander verbunden sein, der sich in Umfangsrichtung erstreckt. Über diesen Tragring 29 sind die Tragstege 28 am Frischgaskanal 17 axial und drehfest abgestützt. Vorzugsweise ist besagter Tragring 29 integral an den Tragstegen 28 bzw. an der Tragwelle 27 ausgebildet. Die Tragstege 28 bilden zusammen mit dem Tragring 29 das erste axiale Ende 21 des Strömungsleitkörpers 13.

Die einzelnen Leitschaufeln 14 sind jeweils axial mit je einem der Tragstege 28 verbunden. Hierdurch ergibt sich eine Formstabilisierung der Leitschaufeln 14 im Bereich des ersten axialen Endes 21. Desweiteren kann der Strömungsleitkörpers 13 gemäß der hier gezeigten Ausführungsform im Bereich der Tragstege 28 einen radial nach außen abstehenden Ringkragen 30 aufweisen. Dieser Ringkragen 30 ist mit allen Leitschaufeln 14 verbunden, vorzugsweise integral mit dem Leitschaufeln 14 hergestellt. Besagter Ringkragen 30 ist drehfest und axial mit dem Frischgaskanal 17 verbunden. Beispielsweise ist der Ringkragen 30 axial zwischen dem Flansch 19 und dem Gehäuse 18 eingespannt.

Der Antriebskörper 23 besitzt bei der hier gezeigten Ausführungsform mehrere, sternförmig von der Tragwelle 27 ausgehende Antriebsstege 31. Die Anzahl der Antriebsstege 31 entspricht der Anzahl der Leitschaufeln 14, so dass hier vier Antriebsstege 31 vorgesehen sind, die jeweils um 90° zueinander versetzt angeordnet sind. Desweiteren weist der Antriebskörper 23 einen Antriebsring 32 auf, der die Antriebsstege 31 radial außen miteinander verbindet. Die Antriebsstege 31 bilden zusammen mit dem Antriebsring 32 das zweite axiale Ende 22 des Strömungsleitkörpers 13. Die Leitschaufeln 14 sind jeweils axial mit jeweils einem der Antriebsstege 31 verbunden. Hierdurch ergibt sich eine Formstabilisierung der Leitschaufeln 14 im Bereich des zweiten axialen Endes 22.

Bei der hier gezeigten, bevorzugten Ausführungsform ist die Tragwelle 27 im Bereich des zweiten axialen Endes 22 drehfest mit dem Antriebskörper 23 verbunden. Im vorliegenden Fall ist die Tragwelle 27 hierzu drehfest mit den Antriebsstegen 31 verbunden. Ebenso ist es grundsätzlich möglich, den Antriebskörper 23 bzw. die Antriebsstege 31 im Bereich des zweiten axialen Endes 22 an der Tragwelle 27 drehbar zu lagern.

Bei der hier gezeigten Ausführungsform ist die Tragwelle 27 über einen Lagerkörper 33 drehbar und radial am Frischgaskanal 17 abgestützt. Besagter Lagerkörper 33 weist einen Lagerkern 34 auf, an dem bzw. in dem die Tragwelle 27 im Bereich des zweiten axialen Endes 22 drehbar gelagert ist. Besagter Lagerkern 34 ist über wenigstens einen Lagersteg 35 am Frischgaskanal 17 abgestützt. Es ist klar, dass auch mehrere Lagerstege 35 vorgesehen sein können, die dann sternförmig angeordnet sind.

Ferner weist der Antriebskörper 23 beispielsweise eine Antriebshülse 36 auf, die sich vom Antriebsring 32 ausgehend axial erstreckt. Die Antriebshülse 36 ersteckt sich in axialer Richtung dabei bis unmittelbar vor den Ringkragen 30. Diese Antriebshülse 36 bildet ein radiales Widerlager für die Hülle 26 des Strömungsleitkörpers 13, die sich bei einem erhöhtem Druck im Frischgaskanal 17 aufweiten kann.

Bei fest mit der Tragwelle 27 verbundenen Antriebsstegen 31 führt die über die Antriebskörper 23 in den Strömungsleitkörper 13 eingeleitete Verwindung zu einer Torsion der Lagerwelle 27, wobei diese als Torsionsfeder wirkt und den Strömungsleitkörper 13 in seine Ausgangsstellung vorspannt. Bei einer drehbaren Lagerung der Antriebsstege 31 an der Tragwelle 27 führt die durch den Antriebskörper 23 in den Strömungsleitkörper 13 eingeleitete Verwindung zu einer Verdrehung der Antriebsstege 31 relativ zur Tragwelle 27, was zu einer erhöhten Biegebelastung der Leitschaufeln 14 im Bereich des zweiten axialen Endes 22 führt. Je nach Materialauswahl der Leitschaufeln 14 kann diese Biegebelastung jedoch ohne weiteres elastisch aufgenommen werden.

Vorzugsweise sind die Antriebsstege 31 integral am Antriebskörper 23 ausgebildet. Ebenso können der Antriebsring 32 und/oder die Antriebshülse 36 integral am Antriebskörper 23 ausgebildet sein.

Vorzugsweise lässt sich der Strömungsleitkörper 13 zusammen mit dem Antriebskörper 23 so herstellen, dass zunächst die Tragwelle 27 zusammen mit den Tragstegen 28 und dem Tragring 29 aus einem ersten Kunststoff hergestellt werden. Unabhängig davon kann der Antriebskörper 23 mit Antriebsstegen 31, Antriebsring 32 und Antriebshülse 36 sowie Antriebsglied 24 ebenfalls aus einem Kunststoff hergestellt werden, wobei für die beiden Bauteile der gleiche Kunststoff verwendbar ist. Anschließend werden die beiden Bauteile miteinander verbaut, d.h. die Tragwelle 27 wird in das Zentrum der Antriebsstege 31 gesteckt. In einer weiteren Spritzgussform, in welcher die Tragstege 28 und die Antriebsstege 31, z.B. zueinander fluchtend, ausgerichtet sind, werden mit einem weiteren Spritzvorgang aus einem zweiten Kunststoff die Leitschaufeln 14 und der Ringkragen 30 angespritzt, wobei sich die Leitschaufeln 14 radial innen mit der Tragwelle 27 und axial einerseits mit den Tragstegen 28 und axial andererseits mit den Antriebsstegen 31 verbinden.

Das für die Herstellung der Leitschaufeln 14 verwendete Material zeichnet sich gegenüber dem für die Herstellung der anderen Komponenten des Strömungsleitkörpers 13 sowie gegenüber dem Material zur Herstellung des Antriebskörpers 23 durch eine erhöhte Biegeweichheit aus.

Die in Fig. 1 angedeutete Steuerung 16 kann beispielsweise so ausgestaltet sein, dass sie die Verwindung des Strömungsleitkörpers 13 in Abhängigkeit von Last und/oder Drehzahl der Brennkraftmaschine 4 einstellt. Beispielsweise kann diese Steuerung 16 in einem unteren Bereich von Last und/oder Drehzahl die Verwindung des Strömungsleitkörpers 13 so einstellen, dass sich für die Leitschaufeln 14 in der einen Drehrichtung ein maximaler Anstellwinkel ergibt, um so einen maximalen Drall in der einen Drehrichtung zu erzeugen. Für einen mittleren Bereich von Last und/oder Drehzahl kann die Steuerung 16 die Verwindung des Strömungsleitkörpers 13 so einstellen, dass die Leitschaufeln 14 für eine drallfreie Frischgasströmung parallel zur Hauptströmungsrichtung ausgerichtet sind. D.h., im mittleren Bereich von Last und/oder Drehzahl betätigt die Steuerung 16 den Stellantrieb 15 so, dass der Strömungsleitkörper 13 seine unverformte Ausgangsstellung entsprechend den Fig. 2 bis 4 einnehmen kann. Darüber hinaus kann die Steuerung 16 so ausgestaltet sein, dass sie in einem oberen Bereich von Last und/oder Drehzahl die Verwindung des Strömungsleitkörpers 13 so einstellt, dass sich für die Leitschaufeln 14 nunmehr in der anderen Richtung ein maximaler Anstellwinkel ergibt, der einen Drall in der anderen Drehrichtung erzeugt. Die einzelnen Drehzahlbereiche zur drehzahlabhängigen Ansteuerung des Drallerzeugers 12 sind auf die Leistungsfähigkeit der Ladeeinrichtung 8 so abgestimmt, dass deren Leistungsfähigkeit durch die jeweils eingestellt Drallrichtung bzw. durch die Deaktivierung des Drallerzeugers 12 im mittleren Bereich von Last und/oder Drehzahl optimiert ist.

Dabei ist klar, dass die Steuerung 16 auch so ausgestaltet sein kann, dass sie auch mehrere, zwischen den den maximalen Anstellwinkeln zugeordneten Endstellungen liegende Zwischenstellungen für die Leitschaufeln 14 in Abhängigkeit von Last und/oder Drehzahl einstellen kann.

## Patentansprüche

1. Frischgasanlage zur Versorgung einer Brennkraftmaschine (4) mit Frischgas, insbesondere in einem Kraftfahrzeug,
- mit einer Ladeeinrichtung (8) zur Druckerhöhung im Frischgas,
- mit einem stromauf der Ladeeinrichtung (8) angeordneten Drallerzeuger (12) zum Erzeugen eines um die Hauptströmungsrichtung des Frischgases drehenden Dralls im Frischgas,
- wobei der Drallerzeuger (12) Leitschaufeln (14) mit verstellbarem Anstellwinkel aufweist,
- wobei der Drallerzeuger (12) einen Strömungsleitkörper (13) aufweist, an dem die Leitschaufeln (14) integral ausgebildet sind und der zum Verstellen des Anstellwinkels der Leitschaufeln (14) aus einer unverformten Ausgangsstellung heraus um die Hauptströmungsrichtung unter elastischer Verformung verwindbar ist,
**dadurch gekennzeichnet,**
- **dass** der Strömungsleitkörper (13) in einem Frischgaskanal (17) angeordnet ist, an einem seiner axialen Enden (21) axial fest und drehfest mit dem Frischgaskanal (17) verbunden ist und an seinem anderen axialen Ende (22) axial fest und drehfest mit einem ringförmigen Antriebskörper (23) des Drallerzeugers (12) verbunden ist,
- **dass** der Antriebskörper (23) im Frischgaskanal (17) um die Hauptströmungsrichtung des Frischgases drehbar angeordnet ist und mittels eines Stellantriebs (15) des Drallerzeugers (12) drehend antreibbar ist.

2. Frischgasanlage nach Anspruch 1,
**dadurch gekennzeichnet,**
**dass** der Stellantrieb (15) mit einem Antriebsglied (24) zusammenwirkt, das eine im Frischgaskanal (17) ausgebildete Aussparung (25) radial durchdringt und fest mit dem Antriebskörper (23) verbunden ist.

3. Frischgasanlage nach Anspruch 1 oder 2,
**dadurch gekennzeichnet,**
- **dass** der Strömungsleitkörper (13) eine sich vom Anströmende zum Abströmende erstreckende, in Umfangsrichtung geschlossen umlaufende Hülle (26) aufweist, und/oder
- **dass** die Hülle (26) integral an den Leitschaufeln (14) ausgebildet ist.

4. Frischgasanlage nach einem der Ansprüche 1 bis 3,
**dadurch gekennzeichnet,**
**dass** der Strömungsleitkörper (13) so hergestellt ist, dass sich die Leitschaufeln (14) in der unverformten Ausgangsstellung des Strömungsleitkörpers (13) parallel zur Hauptströmungsrichtung des Frischgases erstrecken.

5. Frischgasanlage nach einem der Ansprüche 1 bis 4,
**dadurch gekennzeichnet,**
**dass** der Drallerzeuger (12) so ausgestaltet ist, dass der Strömungsleitkörper (13) aus einer unverformten Ausgangsstellung in der einen und in der anderen Drehrichtung verwindbar ist.

6. Frischgasanlage nach einem der Ansprüche 1 bis 5,
**dadurch gekennzeichnet,**
**dass** der Strömungsleitkörper (13) eine koaxial zur Hauptströmungsrichtung und zentrisch angeordnete Tragwelle (27) aufweist, die einenends axial und drehfest am Frischgaskanal (17) abgestützt ist, an der einenends der Antriebskörper (23) angeordnet ist und mit der die Leitschaufeln (14) radial innen verbunden sind.

7. Frischgasanlage nach Anspruch 6,
**dadurch gekennzeichnet,**
- **dass** die Tragwelle (27) über sternförmig angeordnete Tragstege (28) axial und drehfest am Frischgaskanal (17) abgestützt ist, und/oder
- **dass** die Tragstege (28) radial außen über einen Tragring (29) miteinander verbunden und axial und drehfest am Frischgaskanal (17) abgestützt sind, und/oder
- **dass** die Tragstege (28) integral an der Tragwelle (27) ausgebildet sind, und/oder
- **dass** der Tragring (29) integral an den Tragstegen (28) ausgebildet ist, und/oder
- **dass** jede Leitschaufel (14) axial mit je einem der Tragstege (28) verbunden ist, und/oder
- **dass** der Strömungsleitkörper (13) im Bereich der Tragstege (28) einen radial nach außen abstehenden Ringkragen (30) aufweist, der mit allen Leitschaufeln (14) verbunden ist und der drehfest mit dem Frischgaskanal (17) verbunden ist, und/oder
- **dass** der Ringkragen (30) integral an den Leitschaufeln (14) ausgebildet ist.

8. Frischgasanlage nach Anspruch 6 oder 7,
**dadurch gekennzeichnet,**
- **dass** der Antriebskörper (23) sternförmig von der Tragwelle (27) ausgehende Antriebsstege (31) aufweist, und/oder
- **dass** die Antriebsstege (31) radial außen über einen Antriebsring (32) des Antriebskörpers (23) miteinander verbunden sind, und/oder
- **dass** jede Leitschaufel (14) axial mit je einem der Antriebsstege (31) verbunden ist, und/oder
- **dass** der Antriebskörper (23) oder die Antriebsstege (31) entweder drehfest mit der Tragwelle (27) verbunden ist/sind oder drehbar an der Tragwelle (27) gelagert ist/sind, und/oder
- **dass** die Tragwelle (27) über einen Lagerkörper (35) drehbar und radial am Frischgaskanal (17) abgestützt ist, und/oder
- **dass** der Lagerkörper (33) einen Lagerkern (34), an oder in dem die Tragwelle (27) drehbar gelagert ist, sowie zumindest einen den Lagerkern (34) am Frischgaskanal (17) abstützenden, radial vom Lagerkern (34) ausgehenden Lagersteg (35) aufweist, und/oder
- **dass** der Antriebskörper (23) eine Antriebshülse (36) aufweist, die sich vom Antriebsring (32) ausgehend axial erstreckt, und/oder
- **dass** die Antriebsstege (31) integral am Antriebskörper (23) ausgebildet sind, und/oder
- **dass** der Antriebsring (32) integral am Antriebskörper (23) ausgebildet ist, und/oder
- **dass** die Antriebshülse (36) integral am Antriebskörper (23) ausgebildet ist.

9. Frischgasanlage nach einem der Ansprüche 6 bis 8, **dadurch gekennzeichnet,**
- **dass** die Leitschaufeln (14) zur drehfesten Verbindung mit dem Antriebskörper (23) an diesen angespritzt sind,
- **dass** die Leitschaufeln (14) an die Tragwelle (27) und/oder an die Tragstege (28) und/oder an den Tragring (29) angespritzt sind.

10. Frischgasanlage nach einem der Ansprüche 1 bis 9, **dadurch gekennzeichnet,**
- **dass** eine Steuerung (16) vorgesehen ist, die in Abhängigkeit von Last und/oder Drehzahl der Brennkraftmaschine (4) die Verwindung des Strömungsleitkörpers (13) einstellt,
- **dass** die Steuerung (16) in einem unteren Bereich von Last und/oder Drehzahl die Verwindung des Strömungsleitkörpers (13) so einstellt, dass sich in der einen Richtung ein maximaler Anstellwinkel für einen Drall in der einen Drehrichtung ergibt,
- **dass** die Steuerung (16) in einem mittleren Bereich von Last und/oder Drehzahl die Verwindung des Strömungsleitkörpers (13) so einstellt, dass die Leitschaufeln (14) für eine drallfreie Frischgasströmung parallel zur Hauptströmungsrichtung des Frischgases ausgerichtet sind,
- **dass** die Steuerung (16) in einem oberen Bereich von Last und/oder Drehzahl die Verwindung des Strömungsleitkörpers (13) so einstellt, dass sich in der anderen Richtung ein maximaler Anstellwinkel für einen Drall in der anderen Drehrichtung ergibt.

11. Frischgasanlage nach Anspruch 10,
**dadurch gekennzeichnet,**
**dass** die Steuerung (16) zum Einstellen mehrerer zwischen den den maximalen Anstellwinkeln zugeordneten Endstellungen liegenden Zwischenstellungen in Abhängigkeit von Last und/oder Drehzahl ausgestaltet ist.

12. Frischgasanlage nach einem der Ansprüche 1 bis 11,
**dadurch gekennzeichnet,**
- **dass** der Strömungsleitkörper (13) aus einem elastischen Kunststoff einstückig hergestellt ist und integral daran ausgeformte Leitschaufeln (14) aufweist, deren Anstellwinkel gegenüber einer Hauptdurchströmungsrichtung des Strömungsleitkörpers (13) aus einer unverformten Ausgangsstellung heraus durch Verwinden des Strömungsleitkörpers (13) um die Hauptdurchströmungsrichtung verstellbar ist, und/oder
- **dass** der Strömungsleitkörper (13) durch Kunststoff-Spritzgießen in Ein-Schuss-Spritztechnik oder in Zwei-Schuss-Spritztechnik hergestellt ist.

13. Drallerzeuger für eine Frischgasanlage (1) insbesondere nach einem der Ansprüche 1 bis 12, mit einem Strömungsleitkörper (13), an dem Leitschaufeln (14) integral ausgebildet sind und der zum Verstellen eines Anstellwinkels der Leitschaufeln (14) aus einer unverformten Ausgangsstellung heraus um die Hauptströmungsrichtung unter elastischer Verformung verwindbar ist,
**dadurch gekennzeichnet,**
- **dass** der Strömungsleitkörper (13) in einem Frischgaskanal (17) angeordnet ist, an einem seiner axialen Enden (21) axial fest und drehfest mit dem Frischgaskanal (17) verbunden ist und an seinem anderen axialen Ende (22) axial fest und drehfest mit einem ringförmigen Antriebskörper (23) des Drallerzeugers (12) verbunden ist,
- **dass** der Antriebskörper (23) im Frischgaskanal (17) um die Hauptströmungsrichtung des Frischgases drehbar angeordnet ist und mittels eines Stellantriebs (15) des Drallerzeugers (12) drehend antreibbar ist.

## Claims

1. A fresh gas system for supplying an internal combustion engine (4) with fresh gas, in particular in a motor vehicle,
- comprising a charging device (8) for increasing the pressure of the fresh gas,
- comprising a swirl generator (12) arranged upstream of the charging device (8) for generating a swirl which rotates about the main flow direction of the fresh gas, in the fresh gas,
- wherein the swirl generator (12) has guide blades (14) with an adjustable angle of incidence,
- wherein the swirl generator (12) has a flow guide body (13) on which the guide blades (14) are formed integral, and which, for adjusting the angle of incidence of the guide blades (14), can be twisted with elastic deformation about the main flow direction starting from an undeformed initial position,
**characterized in**
- **that** the flow guide body (13) is arranged in a fresh gas channel (17), is connected at one of its axial ends (21) axially fixed and torque-proofed with the fresh gas channel (17), and is connected at its other axial end (22) axially fixed and torque-proofed with a circular drive body (23) of the swirl generator (12),
- **that** the drive body (23) in the fresh gas channel (17) is arranged rotatable about the main flow direction of the fresh gas and can be driven rotatably by means of the actuator drive (15) of the swirl generator (12).

2. The fresh gas system according to claim 1
**characterized in**
**that** the actuator drive (15) interacts with a drive element (24) which radially penetrates a recess (25) formed in the fresh gas channel (17) and which is fixed connected with the drive body (23).

3. The fresh gas system according to claim 1 or claim 2,
**characterized in**
- **that** the flow guide body (13) comprises a shell (26) which extends from the incident flow end to the exhaust flow end, and which runs in circumferential direction around the whole circumference, and/or
- **that** the shell (26) is formed integral on the guide blades (14).

4. The fresh gas system according to any one of the claims 1 to 3,
**characterized in**
**that** the flow guide body (13) is fabricated such that the guide blades (14) in the undeformed initial position of the flow guide body (13) extend in parallel to the main flow direction of the fresh gas.

5. The fresh gas system according to any one of the claims 1 to 4,
**characterized in**
**that** the swirl generator (12) is formed such that the flow guide body (13), starting from an undeformed initial position, can be twisted in the one and in the other rotational direction.

6. The fresh gas system according to any one of the claims 1 to 5,
**characterized in**
**that** the flow guide body (13) comprises a supporting shaft (27) which is arranged centrically and coaxial to the main flow direction, and which is supported axially and torque-proofed on one end at the fresh gas channel (17), and at which the drive body (23) is arranged on one end, and with which the guide blades (14) are connected radially inside.

7. The fresh gas channel according to claim 6,
**characterized in**
- **that** the supporting shaft (27) is supported axially and torque-proofed at the fresh gas channel (17) via supporting webs (28), which are arranged starlike, and/or
- **that** the supporting webs (28) are connected radially outside to each other via a supporting ring (29), and are supported axially and torque-proofed at the fresh gas channel (17), and/or
- **that** the supporting webs (28) are formed integral on the supporting shaft (27), and/or
- **that** the supporting ring (29) is formed integral on the supporting webs (28), and/or
- **that** each guide blade (14) is connected axially with one of the supporting webs (28), respectively, and/or
- **that**, in the region of the supporting webs (28), the flow guide body (13) comprises an annular collar (30) projecting outward which is connected with all guide blades (14), and which is connected torque-proofed with the fresh gas channel (17), and/or
- **that** the annular collar (30) is formed integral on the guide blades (14).

8. The fresh gas system according to claim 6 or claim 7,
**characterized in**
- **that** the drive body (23) comprises drive webs (31) extending starlike from the supporting shaft (27), and/or
- **that** the drive webs (31) are connected to each other radially outside via a drive ring (32) of the drive body (23), and/or
- **that** each guide blade (14) is connected axially with one of the drive webs (31), respectively, and/or
- **that** the drive body (23) or the drive webs (31) is/are either connected torque-proofed with the supporting shaft (27) or supported rotatably at the supporting shaft (27), and/or
- **that** the supporting shaft (27) is supported rotatably and radially via a bearing body (33) at the fresh gas channel (17), and/or
- **that** the bearing body (33) comprises a bearing core (34) at or in which the supporting shaft (27) is supported rotatably, and at least one bearing web (35) which supports the bearing core (34) at the fresh gas channel (17) and which extends radially from the bearing core (34), and/or
- **that** the drive body (23) comprises a drive sleeve (36) which extends axially starting at the drive ring (32), and/or
- **that** the drive webs (31) are formed integral on the drive body (23), and/or
- **that** the drive ring (32) is formed integral on the drive body (23), and/or
- **that** the drive sleeve (36) is formed integral on the drive body (23).

9. The fresh gas system according to any one of the claims 6 to 8,
**characterized in**
- **that** for a torque-proofed connection with the drive body (23), the guide blades (14) are injected at the same,
- **that** the guide blades (14) are injected at the supporting shaft (27), and/or at the supporting webs (28), and/or at the supporting ring (29).

10. The fresh gas system according to any one of the claims 1 to 9,
**characterized in**
- **that** a control (16) is provided which, depending on the load and/or speed of the internal combustion engine (4), adjusts the twisting of the flow guide body (13),
- **that** the control (16) adjusts the twisting of the flow guide body (13) in a lower range of load and/or speed such that it results in a maximum angle of incidence in the one direction for a swirl in the one rotational direction,
- **that** the control (16) adjusts the twisting of the flow guide body (13) in a medium range of load and/or speed such that the guide blades (14) are aligned in parallel to the main flow direction of the fresh gas for a swirl-free fresh gas flow,
- **that** the control (16) adjusts the twisting of the flow guide body (13) in an upper range of load and/or speed such that it results in a maximum angle of incidence in the other direction for a swirl in the other rotational direction.

11. The fresh gas system according to claim 10,
**characterized in**
**that** the control (16) is designed for adjusting, depending on load and/or speed, a plurality of intermediate positions between the end positions associated to the maximum angles of incidence.

12. The fresh gas system according to any one of the claims 1 to 11,
**characterized in**
- **that** the flow guide body (13) is made of an elastic plastic as a single piece, and comprises guide blades (14) integrally formed thereon, the angle of incidence of which is adjustable with respect to a main flow direction of the flow guide body (13) by twisting the flow guide body (13) about the main flow direction starting from an undeformed initial position, and/or
- **that** the flow guide body (13) is manufactured by plastic injection molding in one-injection molding technique or in two-injection molding technique.

13. A swirl generator for a fresh gas system (1), in particular according to any one of the claims 1 to 12, comprising a flow guide body (13) on which guide blades (14) are integrally formed, and which, for adjusting an angle of incidence of the guide blades (14), can be twisted with elastic deformation about the main flow direction starting from an undeformed initial position,
**characterized in**
- **that** the flow guide body (13) is arranged in a fresh gas channel (17), is connected at one of its axial ends (21) axially fixed and torque-proofed with the fresh gas channel (17), and is connected at its other axial end (22) axially fixed and torque-proofed with a circular drive body (23) of the swirl generator (12),
- **that** the drive body (23) in the fresh gas channel (17) is arranged rotatable about the main flow direction of the fresh gas and can be driven rotatably by means of the actuator drive (15) of the swirl generator (12).

## Revendications

1. Installation de gaz frais pour alimenter un moteur à combustion interne (4) en gaz frais, notamment dans un véhicule automobile,
- comportant un dispositif de charge (8) pour augmenter la pression dans le gaz frais,
- comportant un générateur de torsion (12) disposé en amont du dispositif de charge (8) pour générer une torsion tournant autour de la direction d'écoulement principal du gaz frais dans le gaz frais,
- dans lequel le générateur de torsion (12) présente des aubes directrices (14) avec angle d'incidence réglable,
- dans lequel le générateur de torsion (12) présente un corps conducteur d'écoulement (13), sur lequel les aubes directrices (14) sont réalisées en un seul tenant et qui à des fins de réglage de l'angle d'incidence des aubes directrices (14) peut être tordu à partir d'une position de départ non déformée autour de la direction d'écoulement principal sous déformation élastique,
**caractérisée en ce que**
- le corps conducteur d'écoulement (13) est disposé dans un canal de gaz frais (17), est relié à une de ses extrémités axiales (21) au canal de gaz frais (17) de manière axiale, fixe et solidaire en rotation et est relié à son autre extrémité axiale (22) à un corps d'entraînement annulaire (23) du générateur de torsion (12) de manière axiale, fixe et solidaire en rotation,
- le corps d'entraînement (23) dans le canal de gaz frais (17) est disposé rotativement autour de la direction d'écoulement principal du gaz frais et peut être entraîné en rotation au moyen d'une servo-commande (15) du générateur de torsion (12).

2. Installation de gaz frais selon la revendication 1,
**caractérisée en ce que**
la servo-commande (15) coopère avec un organe d'entraînement (24), qui traverse radialement une cavité (25) ménagée dans le canal de gaz frais (17) et est relié solidement au corps d'entraînement (23).

3. Installation de gaz frais selon la revendication 1 ou 2,
**caractérisée en ce que**
- le corps conducteur d'écoulement (13) présente une enveloppe (26) s'étendant de l'extrémité d'amenée d'écoulement à l'extrémité d'évacuation d'écoulement, en faisant le tour fermé dans la direction circonférentielle, et/ou
- l'enveloppe (26) est réalisée intégralement sur les aubes directrices (14).

4. Installation de gaz frais selon une des revendications 1 à 3,
**caractérisée en ce que**
le corps conducteur d'écoulement (13) est fabriqué de telle sorte que les aubes directrices (14) dans la position de départ non déformée du corps conducteur d'écoulement (13) s'étendent parallèlement à la direction d'écoulement principal du gaz frais.

5. Installation de gaz frais selon une des revendications 1 à 4,
**caractérisée en ce que**
le générateur de torsion (12) est réalisé de telle sorte que le corps conducteur d'écoulement (13) puisse être tordu à partir d'une position de départ non déformée dans l'une ou l'autre des directions de rotation.

6. Installation de gaz frais selon une des revendications 1 à 5,
**caractérisé en ce que**
le corps conducteur d'écoulement (13) présente un arbre de support (27) disposé centralement et coaxialement à la direction d'écoulement principale, qui à une extrémité est appuyé axialement et de manière solidaire en rotation sur le canal de gaz frais (17), sur lequel à une extrémité le corps d'entraînement (23) est disposé et avec lequel els aubes directrices (14) sont radialement reliées à l'intérieur.

7. Installation de gaz frais selon la revendication 6,
**caractérisé en ce que**
- l'arbre de support (27) est appuyé par l'intermédiaire de gradins de support (28) disposés en forme ce croix axialement et de manière solidaire en rotation sur le canal de gaz frais (17), et/ou
- les gradins de support (28) sont reliés les uns aux autres radialement à l'extérieur par l'intermédiaire d'une bague de support (29) et sont appuyés axialement et de manière solidaire en rotation sur le canal de gaz frais (17), et/ou
- les gradins de support (28) sont réalisés en un seul tenant sur l'arbre de support (27), et/ou
- la bague de support (29) est réalisée en un seul tenant sur les gradins de support (28), et/ou
- chaque aube directrice (14) est reliée axialement à respectivement un des gradins de support (28), et/ou
- le corps conducteur d'écoulement (13) présente au niveau des gradins de support (28) un collier annulaire (30) dépassant radialement vers l'extérieur, qui est relié à toutes les aubes directrices (14) et est relié de manière solidaire en rotation au canal de gaz frais (17), et/ou
- le collier annulaire (30) est réalisé en un seul tenant sur les aubes directrices (14).

8. Installation de gaz frais selon la revendication 6 ou 7,
**caractérisée en ce que**
- le corps d'entraînement (23) présente des gradins d'entraînement (31) partant en forme d'étoile de l'arbre de support (27), et/ou
- les gradins d'entraînement (31) sont reliés les uns aux autres radialement à l'extérieur par l'intermédiaire d'une bague d'entraînement (32) du corps d'entraînement (23), et/ou
- le corps d'entraînement (23) ou les gradins d'entraînement (31) soit est/sont reliés de manière solidaire en rotation avec l'arbre de support (27), soit est/sont positionnés rotativement sur l'arbre de support (27), et/ou
- l'arbre de support (27) est appuyé par l'intermédiaire d'un corps de palier (35) rotativement et radialement sur le canal de gaz frais (17), et/ou
- le corps de palier (33) présente une âme de palier (34), sur ou dans laquelle l'arbre de support (27) est disposé rotativement, ainsi que au moins un gradin de palier (35) appuyant l'âme de palier (34) sur le canal de gaz frais (17), partant radialement de l'âme de palier (34), et/ou
- le corps d'entraînement (23) présente un manchon d'entraînement (36), qui s'étend axialement en partant de la bague d'entraînement (32), et/ou
- les gradins d'entraînement (31) sont réalisés en un seul tenant sur le corps d'entraînement (23), et/ou
- la bague d'entraînement (32) est réalisée en un seul tenant sur le corps d'entraînement (23), et/ou
- le manchon d'entraînement (36) est réalisé en un seul tenant sur le corps d'entraînement (23).

9. Installation de gaz frais selon une des revendications 6 à 8,
**caractérisée en ce que**
- les aubes directrices (14) à des fins de liaison solidaire en rotation avec le corps d'entraînement (23) sont injectées sur celui-ci,
- les aubes directrices (14) sont injectées sur l'arbre de support (27) et/ou sur les gradins de support (28) et/ou sur la bague de support (29).

10. Installation de gaz frais selon une des revendications 1 à 9,
**caractérisée en ce que**
- une unité de commande (16) est prévue, qui règle en fonction de la charge et/ou vitesse de rotation du moteur à combustion interne (4) la torsion du corps conducteur d'écoulement (13),
- l'unité de commande (16) règle dans une plage inférieure de charge et/ou vitesse de rotation la torsion du corps conducteur d'écoulement (13), de telle sorte que dans une direction un angle d'incidence maximal pour une torsion dans une direction de rotation soit obtenu,
- l'unité de commande (16) règle dans une place médiane de charge et/ou vitesse de rotation la torsion du corps conducteur d'écoulement (13), de telle sorte que les aubes directrices (14) soient orientées pour un écoulement de gaz frais exempt de torsion parallèlement à la direction d'écoulement principale du gaz frais,
- l'unité de commande (16) règle dans une plage supérieure de charge et/ou vitesse de rotation la torsion du courant conducteur d'écoulement (13), de telle sorte que dans l'autre direction un angle d'incidence maximal pour une torsion dans l'autre direction de rotation soit obtenu.

11. Installation de gaz frais selon la revendication 10,
**caractérisée en ce que**
l'unité de commande (16) est conçue afin de régler plusieurs positions intermédiaire situées entre les positions finales coordonnées aux angles d'incidence maximaux en fonction de la charge et/ou vitesse de rotation.

12. Installation de gaz frais selon une des revendications 1 à 11,
**caractérisée en ce que**
- le corps conducteur d'écoulement (13) est fabriqué en un seul tenant dans un plastique élastique et présente des aubes directrice (14) façonnées en un seul bloc sur celui-ci, dont l'angle d'incidence par rapport à une direction d'écoulement principal du corps conducteur d'écoulement (13) peut être réglée à partir d'une position de départ non déformée en tordant le corps conducteur d'écoulement (13) autour de la direction d'écoulement principale, et/ou
- le corps conducteur d'écoulement (13) est fabriqué par moulage par injection de plastique dans le cadre d'une technique d'injection à un coup ou d'une technique d'injection à deux coups.

13. Générateur de torsion pour installation de gaz frais (1) notamment selon une des revendications 1 à 12, comportant un corps conducteur d'écoulement (13), sur lequel des aubes directrices (14) sont réalisées en un seul tenant et qui peut être tordu sous déformation élastique afin de régler un angle d'incidence des aubes directrices (14) à partir d'une position de départ non déformée autour de la direction d'écoulement principal,
**caractérisé en ce que**
- le corps conducteur d'écoulement (13) est disposé dans un canal de gaz frais (17), est relié à un de ses extrémités axiales (21) de manière axiale, fixe et solidaire en rotation au canal de gaz frais (17) et est relié à son autre extrémité axiale (22) à un corps d'entraînement annulaire (23) du générateur de torsion (12) de manière axiale, fixe et solidaire en rotation,
- le corps d'entraînement (23) est disposé rotativement dans le canal de gaz frais (17) autour de la direction d'écoulement principal du gaz frais et peut être entraîné en rotation au moyen d'une servo-commande (15) du générateur de torsion (12).
